# EUROPÄISCHE PATENTSCHRIFT

(11) **EP 1 313 819 B1**
(45) Veröffentlichungstag und Bekanntmachung des Hinweises auf die Patenterteilung: **08.06.2005**
(21) Anmeldenummer: 01917089.3
(22) Anmeldetag: 14.03.2001
(51) Int. Cl.: C09J 7/00

(54) **Verwendung einer Selbstklebefolie**
Use of an adhesive tape
Utilisation de ruban adhésif

(30) Priorität: 22.08.2000 DE 10040971; 29.11.2000 DE 10059121
(43) Veröffentlichungstag der Anmeldung: 28.05.2003
(73) Patentinhaber: Uzin Tyro AG, 6374 Buochs (CH)
(72) Erfinder: SIEBER, Reto, CH-6019 Sigigen (CH); SIEBER, Marco, CH-6048 Horw (CH)
(74) Vertreter: Altenburg, Udo, Dipl.-Phys.
(86) Internationale Anmeldenummer: PCT/EP2001/002867
(87) Internationale Veröffentlichungsnummer: WO 2002/016522

(56) Entgegenhaltungen:
- US-A- 3 645 835
- US-A- 4 581 087
- US-A- 5 010 883

## Beschreibung

Die Erfindung betrifft die Verwendung einer Selbstklebefolie zum Verkleben eines Fußbodenbelags an einem Fußboden bzw. einer Treppe gemäß dem Oberbegriff des Anspruchs 1.

Allgemein sind bereits Selbstklebebänder bzw. -folien bekannt, welche zum Teil auch für das Verkleben eines Fußbodenbelags auf einem Fußboden vorgesehen sind. Zur Verlegung von Fußbodenbelägen auf Treppen werden heute üblicherweise entweder aufzutragende Naßkleber oder Klebebänder verwendet, wobei sich jedoch enorm große Kleberückstände beim Entfernen der Fußbodenbeläge von den Treppen ergeben.

Gerade bei der Verklebung eines Fußbodenbelags auf Fußböden mit einer gewissen Restfeuchte, wie etwa im Neubau bei frisch aufgebrachtem Zementestrich oder neu verlegtem Parkett, tritt das Problem auf, daß diese Restfeuchtigkeit vom Fußboden aufsteigt und somit die zum Verkleben verwendeten Haftkleber in ihrer Wirksamkeit beeinträchtigt und somit auch die Handhabbarkeit und eventuelle rückstandsfreie Wiederablösbarkeit von Selbstklebebändern bzw. -folien beeinträchtigt.

Sollen Fußbodenbeläge mit einem Eigengewicht von über 500 g/m² Verwendung finden, tritt insbesondere bei deren Verklebung zusätzlich das Problem auf, daß solche Fußbodenbeläge unter wechselnden Temperatur- und Feuchtigkeitsbedingungen aufgrund der dadurch induzierten Tendenzen zu Dimensionsveränderungen relativ hohe Dehn- bzw. Schrumpfkräfte aufbauen. Eine zuverlässige Verklebung erfordert demnach einerseits eine hohe Klebkraft eines entsprechenden Selbstklebebandes bzw. -folie, andererseits darf dabei aber die rückstandsfreie Wiederablösbarkeit nicht beeinträchtigt werden.

Das Dokument US-A-4 581 087 betrifft ein einseitig haftkleberbeschichtetes Klebeband, welches beim Verpacken von Waren Verwendung finden kann, das perforiert ist, um leichter von Hand zerrissen werden zu können.

Das Dokument US-A-5 010 883 beschreibt ein einseitig klebendes Pflastermaterial, bei welchem eine Schicht perforiert ist, um wasserdurchlässig zu sein, damit eventuell auftretende Wundflüssigkeit von der durch das Pflastermaterial bedeckten Wunde abgeführt werden kann.

Das Dokument US-A-3 645 835 beschreibt ein Selbstklebematerial aus einer Trägerschicht mit zumindest einer unteren Haftkleberbeschichtung, wobei dieses Selbstklebematerial wasserdampfdurchlässig ausgebildet ist und zur Verwendung bei Verbänden, Pflastern und kosmetischen Artikeln dient. Die Wasserdampfdurchlässigkeit wird gemäß diesem Dokument durch intermolekulare Diffusion erzielt.

Die Aufgabe der vorliegenden Erfindung besteht darin, eine Selbstklebefolie zum Verkleben eines Fußbodenbelags, insbesondere eines Teppichbodens, auf einem Fußboden bzw. einer Treppe bereitzustellen, welche die Nachteile des Standes der Technik überwindet und insbesondere eine zuverlässige Verklebung bei gleichzeitig einfacher Handhabung und Wiederablösbarkeit, insbesondere rückstandsfreier Wiederablösbarkeit zumindest vom Fußboden bzw. von der Treppe, bietet.

Die Aufgabe wird erfindungsgemäß mit der Verwendung einer Selbstklebefolie gemäß Anspruch 1 gelöst. Bevorzugte Weiterbildungen der Erfindung sind in den Unteransprüchen definiert.

Die erfindungsgemäß verwendete Selbstklebefolie dient zum Verkleben eines Fußbodenbelags, insbesondere eines Teppichbodens, auf einem Fußboden bzw. einer Treppe. Dabei sind insbesondere auch Fußbodenbeläge mit einem Eigengewicht von über 500 g/m² verklebbar. Die Selbstklebefolie weist eine Trägerschicht auf, welche an einer oberen, dem Fußbodenbelag zugewandten Oberfläche und an einer unteren, dem Fußboden bzw. der Treppen zugewandten Oberfläche mit einer Haftkleberbeschichtung beschichtet ist.

Erfindungsgemäß ist die Selbstklebefolie wasserdampfdurchlässig mit einem s_{d}-Wert von 15 m oder weniger ausgebildet, wobei die Trägerschicht aus Kunststofffolie besteht und wobei zumindest die Trägerschicht perforiert ist. Der s_{d}-Wert gibt die Wasserdampfdiffusionsäquivalente Luftschichtdicke im der Einheit [m] an. Dabei wird der s_{d}-Wert der Wasserdampfdurchlässigkeit nach ASTM E 398, Methode Dr. Lyssy bestimmt.

Durch die erfindungsgemäße Gestaltung der Selbstklebefolie ist es möglich, daß eventuell vom Fußboden aufsteigende Restfeuchtigkeit, d.h. den Wasserdampf, insbesondere bei frisch verlegtem Parkett oder bei der Verlegung von Fußbodenbelägen auf frisch aufgebrachtem Zementestrich, welcher unter Umständen nicht vollständig ausgetrocknet ist, sich nicht zwischen dem Fußboden und der Trägerschicht der erfindungsgemäßen Selbstklebefolie ansammelt und somit die Klebeeigenschaften der verwendeten Haftkleberbeschichtung negativ beeinflußt. Insbesondere kann das Nachlassen der Klebkraft sowie eine eventuell verschlechterte Wiederablösbarkeit vermieden werden. Auch kann es aufgrund der erfindungsgemäßen Gestaltung der Selbstklebefolie bei Verkleben eines Fußbodenbelags nicht zur Bildung von Schimmel oder Aufweichungen des eventuell verlegten Parketts aufgrund von angesammeltem Wasserdampfkommen.

Der s_{d}-Wert liegt bevorzugt im Bereich von 0,2 m bis 15 m, besonders bevorzugt im Bereich von 0,5 m bis 7 m.

Die Wasserdampfdurchlässigkeit der Trägerschicht und der Haftkleberbeschichtung ergibt sich erfindungsgemäß durch Perforieren zumindest der Trägerschicht und/oder Perforieren der Haftkleberbeschichtung zumindest einer der Oberflächen. Somit kann auf einfache Weise eine Wasserdampfdurchlässigkeit der Selbstklebefolie erreicht werden. Das Perforieren gemäß der Erfindung ist dabei nicht so zu verstehen, daß die Selbstklebefolie lediglich abschnittsweise vorkonfektioniert ist und vorgegebene Abschnitte der Selbstklebefolie entlang entsprechend verlaufender Perforationslöcher von der übrigen Selbstklebefolie abtrennbar sind. Allgemein kann eine Vorkonfektionierung jedoch erfolgen, falls erforderlich und gewünscht.

Es ist besonders bevorzugt, die Trägerschicht und/oder die Haftkleberbeschichtung zumindest einer der Oberflächen über die gesamte Fläche verteilt mit Perforationslöchern zu versehen. Somit ist, insbesondere bei großflächiger Verwendung der erfindungsgemäßen Selbstklebefolie, eine bestmögliche Wasserdampfdurchlässigkeit gegeben.

Besonders vorteilhaft ist es, falls die Perforationslöcher in der Trägerschicht und in der Haftkleberbeschichtung zumindest einer der Oberflächen miteinander fluchtend angeordnet sind, so daß ein direkter Durchlaß eventuell aufsteigenden Wasserdampfs aus dem Fußboden möglich ist.

Bevorzugt weisen die Perforationslöcher einen Abstand voneinander von vorzugsweise weniger als 10 cm auf, wobei die Löcher eine Querschnittsfläche von vorzugsweise weniger als 4 mm² aufweisen.

Selbstverständlich ist es im Rahmen der Erfindung möglich, beispielsweise eine perforierte Trägerschicht mit einer zumindest an einer Oberfläche perforierten Haftkleberbeschichtung und einer unperforierten diffusionsfähigen Haftkleberbeschichtung auf der jeweils anderen Oberfläche zu kombinieren. So kann die perforierte Trägerschicht beispielsweise nur an der oberen oder der unteren Oberfläche mit einer perforierten Haftkleberbeschichtung versehen sein und an der jeweils anderen Oberfläche eine unperforierte diffusionsfähige Haftkleberbeschichtung aufweisen, die perforierte Trägerschicht kann aber auch sowohl an der oberen als auch der unteren Oberfläche mit einer perforierten Haftkleberbeschichtung versehen sein, wobei die jeweiligen Perforationslöcher miteinander fluchtend angeordnet sein können. Bevorzugt kann die Haftkleberbeschichtung zumindest einer der Oberflächen aus für Wasserdampf diffusionsfähigem Haftkleber bestehen, wobei auch beide Oberflächen eine Haftkleberbeschichtung , ob perforiert oder nicht, aufweisen können, welche aus für Wasserdampf diffusionsfähigem Haftkleber besteht.

Vorteilhaft ist es, falls die Trägerschicht zumindest an ihrer unteren Oberfläche im wesentlichen eben ausgebildet ist. Ferner ist es vorteilhaft, falls die Haftkleberbeschichtung zumindest der unteren Oberfläche im wesentlichen eben ausgebildet ist. Die Trägerschicht und/oder die Haftkleberbeschichtung zumindest der unteren Oberfläche können somit zumindest zwischen den Perforationslöchern eben ausgebildet sein, was durch den Ausdruck "im wesentlichen eben" mit ausgedrückt sein soll.

Die Herstellung der besonders bevorzugten Ausführungsform der Selbstklebefolie erfolgt derart, daß die Perforationslöcher von unten, d.h. von der Seite der unteren, dem Fußboden zugewandten Oberfläche her, in die Selbstklebefolie eingestochen werden.

Auf diese Weise wird sichergestellt, daß die erfindungsgemäße Selbstklebefolie zumindest an der unteren Oberfläche der Trägerschicht bzw. daß die Haftkleberbeschichtung zumindest der unteren Oberfläche im wesentlichen eben ausgebildet ist, da die Grate der Perforationslöcher aufgrund der Einstichsrichtung nach oben von der unteren Oberfläche weg gerichtet sind. Ferner ebnet die Haftkleberbeschichtung zumindest der unteren Oberfläche diese im wesentlichen aus.

Die im wesentlichen ebene Ausbildung zumindest der unteren Oberfläche der Trägerschicht und/oder der Haftkleberbeschichtung dient dabei der besonders zuverlässigen Verklebbarkeit der erfindungsgemäßen Selbstklebefolie, wobei durch die Vermeidung von Haftzentren, welche durch punktuell stärkere Haftung aufgrund von Unebenheiten auftreten, eine flächige Verankerung erreicht wird. Dies verbessert die Handhabbarkeit der erfindungsgemäßen Selbstklebefolie und trägt zur rückstandsfreien Wiederablösbarkeit der erfindungsgemäßen Selbstklebefolie vom Fußboden bzw. von der Treppe (falls zumindest die obere Oberfläche im wesentlichen eben ausgebildet ist) und/oder vom Fußbodenbelag (falls auch die obere Oberfläche im wesentlichen eben ausgebildet ist) bei.

Dabei ist es besonders bevorzugt, daß beim Ablösen der erfindungsgemäßen Selbstklebefolie vom Fußboden bzw. der Treppe oder vom Fußboden bzw. der Treppe und/oder vom Fußbodenbelag die Haftkleberbeschichtung an der Trägerschicht verbleibt und somit eine rückstandsfreie Wiederablösbarkeit ermöglicht wird.

Die rückstandsfreie Wiederablösbarkeit der Selbstklebefolie sowohl vom Fußboden bzw. der Treppe als auch vom Fußbodenbelag ist insbesondere dann von Vorteil, wenn beispielsweise im Messebau ein Fußbodenbelag nach Abbau eines Messestandes wiederverwendet werden soll.

Zur Erzielung einer besonders sicheren Verklebung bei gleichzeitig im wesentlichen rückstandsfreier Wiederablösbarkeit vom Fußboden weist in einer bevorzugten Ausführungsform der erfindungsgemäßen Selbstklebefolie die untere Oberfläche der Selbstklebefolie eine Haftkleberbeschichtung geringerer Haftstärke als die Haftstärke der Haftkleberbeschichtung an der oberen Oberfläche auf.

Zur Verbesserung der Handhabbarkeit der erfindungsgemäßen Selbstklebefolie weist diese zumindest an der oberen Oberfläche auf ihrer Haftkleberbeschichtung einen entfernbaren Abdeckfilm auf. Dieser kann beispielsweise aus Silikonpapier oder anderem geeignetem Material bestehen.

Es kann auch zusätzlich oder lediglich auf der unteren Oberfläche ein entfembarer Abdeckfilm vorhanden sein. Im Falle, daß die Haftstärke der unteren Oberfläche im Vergleich zur Haftstärke der oberen Oberfläche geringer ist, ist dies jedoch nicht unbedingt erforderlich.

Der Abdeckfilm liegt lösbar haftend praktisch lückenlos an der entsprechenden Oberfläche an.

Zum Transport kann die Selbstklebefolie in Rollenform vorliegen. Die Selbstklebefolie kann dazu zu einer Rolle gewickelt sein. Generell kann dann die Selbstklebefolie in gewünschter Länge von der Bahnlänge der Rolle abgewickelt werden. Die Selbstklebefolie kann mit bestimmter Breite und auch in bestimmten Längen und/oder Formen vorkonfektioniert sein.

Zur Erzielung bestmöglicher Verklebeergebnisse ist es besonders vorteilhaft, die Selbstklebefolie so auszubilden, daß sie zum großflächigen Abdecken des mit dem Fußbodenblag zu belegenden Fußbodens bzw. der Treppe ausgebildet ist.

Besonders bevorzugt ist es dabei, die Breite der Selbstklebefolie so zu wählen, daß sie in einem Bereich von 80 mm bis 2.000 mm liegt, insbesondere in einem Bereich von 500 mm bis 1.500 mm, und insbesondere in einem Bereich von 600 mm bis 1.000 mm. Bei Verwendung für Treppen ist es besonders bevorzugt, die Breite der Selbstklebefolie mit 240 mm zu wählen, während bei Verwendung auf Fußböden die Breite der Selbstklebefolie vorzugsweise mindestens 350 mm beträgt.

Als Breite wird dabei die Breite definiert, welche im Fall der zu einer Rolle gewickelten Selbstklebefolie als Abwickelbreite der Rolle (Rollenbreite) vorliegt.

Durch die geeignete Wahl der Breite der Selbstklebefolie ist es insbesondere möglich, eine großflächige Abdeckung des zu verklebenden Fußbodens mit der Selbstklebefolie zu erreichen, und somit eine besonders einfache und sichere Verklebung zu ermöglichen. Die bevorzugte Breite von 240 mm zur Verwendung der Selbstklebefolie im Bereich von Treppen ist so gewählt, daß die Selbstklebefolie sowohl die Trittstufe als auch die Setzstufe einer Stufe mit Normrnaßen in zwei Stücken großflächig bzw. vollflächig abdecken kann. Jeweils ein auf geeignete Maße zugeschnittenes Stück der Selbstklebefolie kann somit auf der Trittstufe und an der Setzstufe angebracht werden, wobei sich ihre jeweiligen Kanten im Bereich der Stufenkante treffen oder leicht überlappen und somit eine lückenlose Haftfläche bilden. Wird eine Selbstklebefolie mit geringerer Breite gewählt, kann auch dann eine großflächige bzw. vollflächige Verlegung der Selbstklebefolie erreicht werden. Es ist jedoch in einem solchen Fall mehr als jeweils ein auf geeignete Maße zugeschnittenes Stück der Selbstklebefolie notwendig. Vielmehr können dann mehr als zwei Stücke auf geeignete Maße zugeschnitten werden und beispielsweise auch über die Stufenkante geschlagen werden.

Insbesondere im privaten Bereich kann ferner das Bedürfnis bestehen, Fußbodenbeläge nicht großflächig zu fixieren. Die erfindungsgemäße Selbstklebefolie kann dazu auch in einer Breite von 80 mm bis 500 mm vorgesehen sein. Im Fall einer entsprechenden Gestaltung werden Fußbodenbeläge im wesentlichen nur in ihrem Randbereich mit einer erfindungsgemäßen Selbstklebefolie entsprechender Breite fixiert, bzw. wird der Nahtbereich beim Übergang zwischen zwei Fußbodenbelagstücken mit einer entsprechenden Selbstklebefolie unterlegt. Die erfindungsgemäße Selbstklebefolie kann in dieser Ausführungsform wie ein herkömmliches Teppichband gehandhabt werden.

Die Verwendung der erfindungsgemäßen Selbstklebefolie beim Verkleben eines Fußbodenbelages erfolgt bevorzugt auf folgende Weise:

Der gesamte Fußboden wird mit der Selbstklebefolie möglichst lückenlos bedeckt. Dabei richtet man die untere Oberfläche, welche vorzugsweise die geringere Haftstärke aufweist, in Richtung Fußboden. Die obere Oberfläche ist dabei bevorzugt mit dem Abdeckfilm bedeckt. Dann wird der Fußbodenbelag provisorisch aufgelegt und gegebenenfalls zugeschnitten. Anschließend wird ein Teil des Fußbodenbelags wieder zurückgeschlagen, und der Abdeckfilm auf diesem Teil der Selbstklebefolie entfernt. Der zurückgeschlagene Teil des Fußbodenbelags wird wieder auf die obere Oberfläche, welche bevorzugt die größere Haftstärke aufweist, geklappt und gegebenenfalls angepreßt. Mit den übrigen Teilen des Fußbodenbelags wird auf gleiche Weise verfahren, bis der gesamte Fußbodenbelag großflächig am Fußboden verklebt ist.

Zum bevorzugten rückstandsfreien Wiederablösen des Fußbodenbelags vom Fußboden muß dieser lediglich nach oben vom Fußboden abgezogen werden. Dabei trennt sich die Selbstklebefolie von Fußboden und bleibt vorzugsweise am Fußbodenbelag haften. Dabei verbleibt die Haftkleberbeschichtung der unteren Oberfläche an der Trägerschicht. Es ist zusätzlich auch möglich, die erfindungsgemäße

Selbstklebefolie so zu gestalten, daß sich die Selbstklebefolie in der Art vom Fußbodenbelag ablösen läßt, daß die Haftkleberbeschichtung der oberen Oberfläche an der Trägerschicht verbleibt. Somit kann der Fußbodenbelag, beispielsweise bei Anwendung in Messen, wiederverwendet werden, ohne daß seine Handhabbarkeit durch eventuelle Kleberrückstände an seiner Unterseite eingeschränkt ist.

Beim Material der Künststofffolien-Trägerschicht kann es sich insbesondere um Polypropylen- oder Polyethylen-Folie handeln. Die Trägerschicht kann auch aus Polyamid-Kunststoffolie bestehen. Es könnte jedoch auch jedes andere geeignete Material, wie Kautschuk, Latex oder ähnliches denkbar sein.

Um eine gute Handhabbarkeit der erfindungsgemäßen Selbstklebefolie besonders auch dann vorzusehen, wenn sie perforiert ist, weist die Trägerschicht eine Dicke im Bereich von 10 bis 100 µm, bevorzugt eine Dicke im Bereich von 25 bis 75 µm, und besonders bevorzugt eine Dicke im Bereich von 50 bis 70 µm auf.

Als Haftkleber hat sich eine Acrylat-Dispersion, angereichert mit Harzen und mit darin enthaltenem UV- und Alterungsschutz bewährt, wobei jedoch auch jeder andere geeignete Haftkleber verwendbar ist, welcher insbesondere auch für Wasserdampf diffusionsfähig sein kann. Bevorzugt ist die Haftkleberbeschichtung vollflächig, sie kann jedoch auch abschnittsweise aufgebracht sein.

Es können auf jeder der beiden Oberflächen unterschiedliche Haftkleber z.B. mit unterschiedlichen Klebekräften oder auf jeder Oberfläche jeweils der gleiche Haftkleber Verwendung finden.

## Patentansprüche

1. Verwendung einer Selbstklebefolie zum Verkleben eines Fußbodenbelags auf einem Fußboden bzw. einer Treppe, wobei die Selbstklebefolie eine Trägerschicht aufweist, welche an einer oberen, dem Fußbodenbelag zugewandten Oberfläche und an einer unteren, dem Fußboden bzw. der Treppe zugewandten Oberfläche mit einer Haftkleberbeschichtung beschichtet ist,
**dadurch gekennzeichnet, dass**
die Selbstklebefolie wasserdampfdurchlässig mit einem s_{d}-Wert von 15 m oder weniger ausgebildet ist, wobei die Trägerschicht aus Kunststofffolie besteht und wobei zumindest die Trägerschicht perforiert ist.

2. Verwendung einer Selbstklebefolie nach Anspruch 1, **dadurch gekennzeichnet, dass** die Haftkleberbeschichtung zumindest einer der Oberflächen perforiert ist.

3. Verwendung einer Selbstklebefolie nach Anspruch 1 oder 2, **dadurch gekennzeichnet, dass** zumindest die Trägerschicht und/oder auch die Haftkleberbeschichtung zumindest einer der Oberflächen über die gesamte Fläche verteilt mit Perforationslöchern versehen ist/sind.

4. Verwendung einer Selbstklebefolie nach Anspruch 3, **dadurch gekennzeichnet, dass** die Perforationslöcher in der Trägerschicht und der Haftkleberbeschichtung zumindest einer der Oberflächen miteinander fluchtend angeordnet sind.

5. Verwendung einer Selbstklebefolie nach einem der Ansprüche 3 oder 4, **dadurch gekennzeichnet, dass** die Perforationslöcher mit einem Abstand voneinander von weniger als 10 cm vorgesehen sind, wobei die Löcher eine Querschnittfläche von weniger als 4 mm² aufweisen.

6. Verwendung einer Selbstklebefolie nach einem der Ansprüche 1 bis 5, **dadurch gekennzeichnet, dass** die Trägerschicht zumindest an ihrer unteren Oberfläche im Wesentlichen eben ausgebildet ist.

7. Verwendung einer Selbstklebefolie nach einem der Ansprüche 1 bis 6, **dadurch gekennzeichnet, dass** die Haftkleberbeschichtung zumindest der unteren Oberfläche im Wesentlichen eben ausgebildet ist.

8. Verwendung einer Selbstklebefolie nach einem der Ansprüche 1 bis 7, **dadurch gekennzeichnet, dass** die Haftkleberbeschichtung zumindest einer der Oberflächen aus für Wasserdampf diffusionsfähigem Haftkleber besteht.

9. Verwendung einer Selbstklebefolie nach einem der Ansprüche 1 bis 8, **dadurch gekennzeichnet, dass** beim Ablösen vom Fußboden bzw. der Treppe oder vom Fußboden bzw. der Treppe und vom Fußbodenbelag die Haftkleberbeschichtung an der Trägerschicht verbleibt.

10. Verwendung einer Selbstklebefolie nach einem der Ansprüche 1 bis 9, **dadurch gekennzeichnet, dass** die untere Oberfläche eine Haftkleberbeschichtung mit geringerer Haftstärke als die Haftstärke der Haftkleberbeschichtung an der oberen Oberfläche aufweist.

11. Verwendung einer Selbstklebefolie nach einem der Ansprüche 1 bis 10, **dadurch gekennzeichnet, dass** ein entfembarer Abdeckfilm auf zumindest der oberen Oberfläche vorhanden ist.

12. Verwendung einer Selbstklebefolie nach einem der Ansprüche 1 bis 11, **dadurch gekennzeichnet, dass** sie zum großflächigen Abdecken des mit dem Fußbodenbelag zu belegenden Fußbodens bzw. der Treppe ausgebildet ist.

13. Verwendung einer Selbstklebefolie nach einem der Ansprüche 1 bis 12, **dadurch gekennzeichnet, dass** ihre Breite in einem Bereich von 80 mm bis 2000 mm liegt, insbesondere in einem Bereich von 500 mm bis 1500 mm, und insbesondere in einem Bereich von 600 mm bis 1000 mm liegt, wobei ihre Breite bei Verwendung für Treppen insbesondere 240 mm und bei Verwendung auf Fußböden mindestens 350 mm beträgt.

14. Verwendung einer Selbstklebefolie nach einem der Ansprüche 1 bis 11, **dadurch gekennzeichnet, dass** ihre Breite in einem Bereich von 30 mm bis 80 mm, insbesondere in einem Bereich von 50 mm bis 60 mm, liegt.

15. Verwendung einer Selbstklebefolie nach einem der Ansprüche 1 bis 11, **dadurch gekennzeichnet, dass** ihre Breite in einem Bereich von 80 mm bis 500 mm liegt.

16. Verwendung einer Selbstklebefolie nach einem der Ansprüche 1 bis 15, **dadurch gekennzeichnet, dass** die Trägerschicht eine Dicke in einem Bereich von 10 bis 100 µm, bevorzugt in einem Bereich von 25 bis 75 µm, und besonders bevorzugt in einem Bereich von 50 bis 70 µm aufweist.

17. Verwendung einer Selbstklebefolie nach einem der Ansprüche 1 bis 16, **dadurch gekennzeichnet, dass** der s_{d}-Wert im Bereich von 0,2 m bis 15 m, besonders bevorzugt im Bereich von 0,5 m bis 7 m liegt.

18. Verwendung einer Selbstklebefolie nach einem der Ansprüche 1 bis 17, **dadurch gekennzeichnet, dass** die Selbstklebefolie zu einer Rolle gewickelt ist.

## Claims

1. Use of a self-adhesive film for adhering a floor covering to a floor or respectively to a step, the self-adhesive film having a carrier layer which is coated with a contact adhesive coating on an upper surface facing the floor covering and on a lower surface facing the floor or respectively the step, **characterised in that** the self-adhesive film is permeable to water vapour with an s_{d} value of 15 m or less, the carrier layer being formed from plastics material film, and at least the carrier layer being perforated.

2. Use of a self-adhesive film according to claim 1, **characterised in that** the contact adhesive coating of at least one of the surfaces is perforated.

3. Use of a self-adhesive film according to claim 1 or 2, **characterised in that** at least the carrier layer and/or also the contact adhesive coating of at least one of the surfaces are/is provided with perforation holes distributed over the entire area.

4. Use of a self-adhesive film according to claim 3, **characterised in that** the perforation holes in the carrier layer and in the contact adhesive coating of at least one of the surfaces are disposed so as to be in alignment with one another.

5. Use of a self-adhesive film according to one of claims 3 or 4, **characterised in that** the perforation holes are provided at a spacing from one another of less than 10 cm, the holes having an area of cross-section of less than 4 mm².

6. Use of a self-adhesive film according to one of claims 1 to 5, **characterised in that** the carrier layer is substantially flat at least on its lower surface.

7. Use of a self-adhesive film according to one of claims 1 to 6, **characterised in that** the contact adhesive coating of at least the lower surface is substantially flat.

8. Use of a self-adhesive film according to one of claims 1 to 7, **characterised in that** the contact adhesive coating of at least one of the surfaces is formed from a contact adhesive which is diffusible for water vapour.

9. Use of a self-adhesive film according to one of claims 1 to 8, **characterised in that**, during the detachment from the floor or respectively from the step or from the floor or respectively from the step and from the floor covering, the contact adhesive coating remains on the carrier layer.

10. Use of a self-adhesive film according to one of claims 1 to 9, **characterised in that** the lower surface has a contact adhesive coating with a lower adhesive strength than the adhesive strength of the contact adhesive coating on the upper surface.

11. Use of a self-adhesive film according to one of claims 1 to 10, **characterised in that** a removable covering film is present on at least the upper surface.

12. Use of a self-adhesive film according to one of claims 1 to 11, **characterised in that** it is provided for covering a large area of the floor, which is to be covered with the floor covering, or respectively the step.

13. Use of a self-adhesive film according to one of claims 1 to 12, **characterised in that** its width lies within a range of between 80 mm and 2000 mm, more especially within a range of between 500 mm and 1500 mm, and most especially within a range of between 600 mm and 1000 mm, its width being more especially 240 mm when used for steps, and being at least 350 mm when used on floors.

14. Use of a self-adhesive film according to one of claims 1 to 11, **characterised in that** its width lies within a range of between 30 mm and 80 mm, more especially within a range of between 50 mm and 60 mm.

15. Use of a self-adhesive film according to one of claims 1 to 11, **characterised in that** its width lies within a range of between 80 mm and 500 mm.

16. Use of a self-adhesive film according to one of claims 1 to 15, **characterised in that** the carrier layer has a thickness within a range of between 10 and 100 µm, preferably within a range of between 25 and 75 µm, and particularly preferably within a range of between 50 and 70 µm.

17. Use of a self-adhesive film according to one of claims 1 to 16, **characterised in that** the s_{d} value lies within the range of between 0.2 m and 15 m, particularly preferably within the range of between 0.5 m and 7 m.

18. Use of a self-adhesive film according to one of claims 1 to 17, **characterised in that** the self-adhesive film is wound to form a roll.

## Revendications

1. Utilisation d'un film autoadhésif pour le collage d'un revêtement de sol sur un sol ou un escalier, le film autoadhésif possédant une couche porteuse qui est revêtue d'une couche d'adhésif de contact sur une face supérieure, tournée vers le revêtement de sol, et sur une face inférieure, tournée vers le sol ou vers l'escalier, **caractérisée en ce que** le film autoadhésif est perméable à la vapeur d'eau, avec une valeur s_{D} de 15 m ou moins, la couche porteuse étant constituée d'un film plastique et au moins la couche porteuse étant perforée.

2. Utilisation d'un film autoadhésif selon la revendication 1, **caractérisée en ce que** la couche d'adhésif de contact d'au moins l'une des faces est perforée.

3. Utilisation d'un film autoadhésif selon la revendication 1 ou 2, **caractérisée en ce qu'**au moins la couche porteuse et/ou également la couche d'adhésif de contact d'au moins l'une des faces portent des trous de perforation distribués sur l'ensemble de leur surface.

4. Utilisation d'un film autoadhésif selon la revendication 3, **caractérisée en ce que** les trous de perforation dans la couche porteuse et dans la couche d'adhésif de contact d'au moins l'une des faces sont alignés les uns avec les autres.

5. Utilisation d'un film autoadhésif selon l'une des revendications 3 ou 4, **caractérisée en ce que** les trous de perforation sont écartés les uns des autres d'une distance de moins de 10 cm, l'aire de la section des trous étant inférieure à 4 mm².

6. Utilisation d'un film autoadhésif selon l'une des revendications 1 à 5, **caractérisée en ce que** la couche porteuse est conformée de manière essentiellement plane au moins sur sa face inférieure.

7. Utilisation d'un film autoadhésif selon l'une des revendications 1 à 6, **caractérisée en ce que** la couche d'adhésif de contact d'au moins la face inférieure est conformée de manière essentiellement plane.

8. Utilisation d'un film autoadhésif selon l'une des revendications 1 à 7, **caractérisée en ce que** la couche d'adhésif de contact d'au moins l'une des faces est constituée d'un adhésif permettant la diffusion de la vapeur d'eau.

9. Utilisation d'un film autoadhésif selon l'une des revendications 1 à 8, **caractérisée en ce que**, lors d'un décollement du sol ou de l'escalier, ou encore du sol ou de l'escalier et du revêtement de sol, la couche d'adhésif de contact reste sur la couche porteuse.

10. Utilisation d'un film autoadhésif selon l'une des revendications 1 à 9, **caractérisée en ce que** la face inférieure porte une couche d'adhésif de contact offrant une adhérence inférieure à celle de la couche d'adhésif de contact de la face supérieure.

11. Utilisation d'un film autoadhésif selon l'une des revendications 1 à 10, **caractérisée en ce qu'**un film de protection amovible est prévu sur au moins la face supérieure.

12. Utilisation d'un film autoadhésif selon l'une des revendications 1 à 11, **caractérisée en ce qu'**il est conçu pour recouvrir sur une grande surface le sol ou l'escalier à recouvrir du revêtement de sol.

13. Utilisation d'un film autoadhésif selon l'une des revendications 1 à 12, **caractérisée en ce que** sa largeur se situe dans une plage de 80 mm à 2 000 mm, en particulier dans une plage de 500 mm à 1 500 mm, et plus particulièrement dans une plage de 600 mm à 1 000 mm, la largeur étant en particulier de 240 mm dans le cas d'une utilisation pour des escaliers et d'au moins 350 mm dans le cas d'une utilisation sur des sols.

14. Utilisation d'un film autoadhésif selon l'une des revendications 1 à 11, **caractérisée en ce que** sa largeur se situe dans une plage de 30 mm à 80 mm, en particulier dans une plage de 50 mm à 60 mm.

15. Utilisation d'un film autoadhésif selon l'une des revendications 1 à 11, **caractérisée en ce que** sa largeur se situe dans une plage de 80 mm à 500 mm.

16. Utilisation d'un film autoadhésif selon l'une des revendications 1 à 15, **caractérisée en ce que** la couche porteuse présente une épaisseur se situant dans une plage de 10 à 100 µm, de préférence dans une plage de 25 à 75 µm, et de manière particulièrement préférée dans une plage de 50 à 70 µm.

17. Utilisation d'un film autoadhésif selon l'une des revendications 1 à 16, **caractérisée en ce que** la valeur s_{D} se situe dans une plage de 0,2 m à 15 m, de manière particulièrement préférée de 0,5 m à 7 m.

18. Utilisation d'un film autoadhésif selon l'une des revendications 1 à 17, **caractérisée en ce que** le film autoadhésif est enroulé pour former un rouleau.
